(19) Europäisches Patentamt

European Patent Office

Office européen des brevets

(11) Veröffentlichungsnummer : **0 290 908 B1**

# (12) EUROPÄISCHE PATENTSCHRIFT

(45) Veröffentlichungstag der Patentschrift :
06.03.91 Patentblatt 91/10

(51) Int. Cl.⁵ : **C09C 1/24**

(21) Anmeldenummer : 88107015.5

(22) Anmeldetag : 02.05.88

(54) Neue farbreine Eisenoxidpigmente, Verfahren zu ihrer Herstellung und deren Verwenung.

(30) Priorität : 15.05.87 DE 3716300

(43) Veröffentlichungstag der Anmeldung :
17.11.88 Patentblatt 88/46

(45) Bekanntmachung des Hinweises auf die
Patenterteilung :
06.03.91 Patentblatt 91/10

(84) Benannte Vertragsstaaten :
DE FR GB IT NL

(56) Entgegenhaltungen :
DE-A- 3 326 632
GB-A- 762 102
T.C. PATTON : "Pigment Handbook. Properties
and Economics", Band 1, 1973, Seiten
333,338, John Wiley & Sons, New York, US;
C.W. FULLER: "Colored iron oxide pigments,
synthetic"

(73) Patentinhaber : BAYER AG
W-5090 Leverkusen 1 Bayerwerk (DE)

(72) Erfinder : Burow, Wilfried, Dr.
Glindholzstrasse 10
W-4150 Krefeld 10 (DE)
Erfinder : Höfs, Hans-Ulrich, Dr.
Buschstrasse 149
W-4150 Krefeld (DE)
Erfinder : Ganter, Karl-Werner, Dr.
Bethelstrasse 13
W-4150 Krefeld (DE)
Erfinder : Schulten, Gerd-Hermann
Bromberger Strasse 26
W-4100 Duisburg 46 (DE)

## Beschreibung

Die vorliegende Erfindung betrifft neue fremdmetallarme farbreine Eisenoxidrotpigmente, Verfahren zu ihrer Herstellung sowie deren Verwendung.

Vier Verfahren (T.C. Patton, Pigment Handbook, Vol. 1, New York 1973, S. 333) zur Herstellung roter Eisenoxidpigmente werden allgemein angewandt ; ein einfacher wirtschaftlicher und gleichzeitig umweltfreundlicher Weg zur Produktion fremdmetallarmer und farbreiner Eisenoxidrotpigmente wurde jedoch bislang nicht gefunden.

Die Aufgabe der vorliegenden Erfindung ist es verbesserte Eisenoxidrotpigmente zur Verfügung zu stellen, die in einem technisch einfachen Verfahren wirtschaftlich herstellbar sind.

Überraschenderweise wurde nun gefunden, daß diese Anforderungen erfüllt werden durch neuartige Eisenoxidrotpigmente, die nicht erwartungsgemäß nadelförmig sondern clusterförmig sind.

Gegenstand der vorliegenden Erfindung sind Eisenoxidrotpigmente, welche dadurch gekennzeichnet sind, daß sie aus clusterförmigen Pigmentteilchen bestehen.

Die erfindungsgemäßen Pigmente unterscheiden sich durch ihre Clusterform von herkömmlichen Eisenoxidrotpigmenten und sind überraschend farbrein und spurenarm.

Erhältlich sind die erfindungsgemäßen Eisenoxidrotpigmente durch Verglühen hochverzweigter nadelförmiger Eisenoxidgelbpigmente.

Besonders bevorzugt sind solche Eisenoxidrotpigmente, bei denen die clusterförmigen Pigmentteilchen aus mindestens fünf miteinander verwachsenen kugelförmigen Teilchen bestehen. Der Fremdmetallgehalt an As, Pb, Ba der erfindungsgemäßen Eisenoxidrotpigmente beträgt bevorzugt weniger als 5 ppm. Ihr Gesamtgehalt an Cu, $BaSO_4$, Zn, Sb, Cr liegt bevorzugt bei insgesamt unterhalb 200 ppm.

Als geeignete Vorprodukte für die Herstellung der erfindungsgemäßen Eisenoxidrotpigmente können solche Eisenoxidgelbpasten eingesetzt werden, die bislang als ungeeignet zur Herstellung farbreiner Eisenoxidrotpigmente galten, weil sie farblich unreine, ungesättigte Eisenoxidgelbpigemente enthalten.

Die als Vorprodukt eingesetzten Eisenoxidgelbpasten können gemäß der DE-A 3 326 632 hergestellt werden und enthalten nadelförmige, hochverzweigte Pigmentteilchen. Die Vorprodukte können nach allen üblichen Eisenoxidgelbproduktionsverfahren hergestellt werden.

Ein bevorzugtes Verfahren zur Herstellung der erfindungsgemäßen Eisenoxidrotpigmente ist dadurch gekennzeichnet, daß die Keimbildung von Eisenoxidgelb ($\alpha$-FeOOH) in Gegenwart von Verbindungen der Elemente B, Al, Ga, Si, Ge und/oder Sn in Mengen von 0,05 bis 10 Gew.-%, berechnet als 3- oder vierwertige Oxide und bezogen auf den rechnerisch ausgefällten $\alpha$-FeOOH-Keim, vorgenommen wird, der Pigmentbildunsschritt in üblicher Weise erfolgt, von dem dabei entstehenden Gelbschlamm die Salzlauge abgetrennt und die isolierte Eisenoxidgelbpaste zum Eisenoxidrotpigment geglüht und gemahlen wird. Dabei wird zunächst gemäß DE-A 3 326 632 ein Keim mit Ausfällgraden von 20 bis 70% in Gegenwart von Verbindungen der Elemente B, Al, Ga, Si, Ge und/oder Sn bei Temperaturen von Raumtemperaturen bis 70°C erzeugt. Auf diesen Keim läßt man ein Pigment aufwachsen. Die Pigmentbildung kann nach Penniman in Gegenwart von metallischem Eisen, nach dem Anilinverfahren oder Fällverfahren erfolgen, bei dem man durch Vorfällung gereinigte Eisensalze einsetzen kann.

Beim Fällverfahren kann die Pigmentbildung bei konstantem pH-Wert im Bereich 2,8 bis 4,5 oder unter stufenweiser Erhöhung des pH-Wertes während der Pigmentbildung von Werten <3 in 0,1 bis 0,2 Einheiten/Stunde auf Werte von 3,8 bis 4,5 erfolgen.

Nach Beendigung der Pigementbildung erhält man als Vorprodukt zur Herstellung der neuartigen Eisenoxidrotpigmente salzhaltige Gelbschlämme, die nach einem besonders einfachen, wirtschaftlichen und umweltfreundlichen Verfahren zum Eisenoxidrotpigment weiterverarbeitet werden können.

Zunächst wird aus den Fertigschlämmen, die ca. 30 bis 70 g/l Eisenoxidgelb und eine Salzlauge enthalten, das Salz abgetrennt. Die Abtrennung der Salzlauge kann bei dem hochverzweigten, nadelförmigen Vorprodukt erstmalig durch Sedimentation erfolgen, weil das hochverzweigte Gelbpigment mehr als 20 mal schneller sedimentiert als übliches Eisenoxidgelb wie z.B. Bayferrox® 920 (Handelsprodukt der Bayer AG). Nach 3 Stunden Sedimentationszeit kann man die überstehende salzhaltige Lauge abpumpen.

Im Sedimentationsbehälter bleibt eine Gelbpaste zurück, die durch Sedimentation auf einen Gehalt von mehr als 200 g/l Eisenoxidgelb eingedickt wird und noch einen Rest an Salzgehalt aufweist, der bei der nachfolgenden Filtration ausgewaschen wird. Die Eisenoxidgelpaste wird bei der nachfolgenden Filtration am Drehfilter und Waschung auf einen Feststoffgehalt von mehr als 50 Gew.-% entwässert.

Der Filterabwurf ist salzarm (Salzgehalt <0,5 Gew.-%), fließ- und pumpfähig und kann vorteilhaft bei einem Feststoffgehalt von mehr als 50 Gew.-% im nachgeschalteten Sprühtrockner versprüht oder getrocknet werden.

Der Filterabwurf unterscheidet sich in seinen Verarbeitungseigenschaften elementar von herkömm-

2

lichen Gelbpasten, wie z.B. Bayferrox® 920, die bei der Filtration nur zu fließ- und pumpfähigen Pasten mit einem Feststoffgehalt von ca. 30 Gew.-% entwässert werden können. Bei höheren Feststoffgehalten nimmt die Viskosität dieser Gelbpasten so zu, daß eine Weiterverarbeitung der zähen Filterabwürfe und ein Versprühen am Sprühtrockner unmöglich wird.

Bei herkömmlichen Gelbpasten mit einem Feststoffgehalt von ca. 30 Gew.-% müssen bei der nachfolgenden Trocknung oder bei der nachfolgenden Kalzination zum Eisenoxidrot pro t Pigment mehr als 2 t Wasser verdampft werden, entsprechend hoch ist der Erdgasbedarf des Trockners oder Glühofens. Bei den erfindungsgemäß verwendeten Gelbpasten mit Feststoffgehalten von z.B. 50 bis 55 Gew.-%, müssen pro t Pigment höchstens eine t Wasser verdampft werden. Der für die Verdampfung benötigte geringere Erdgasbedarf führt zu einer erheblichen Kostenersparnis. Eine besonders bevorzugte Ausführungsform des erfindungsgemäßen Verfahrens besteht also darin, daß Eisenoxidgelbpasten getrocknet bzw. geglüht werden, die bei der Beschickung der Trocken- oder Glühaggregate einen Feststoffgehalt von mindestens 50 Gew.-% aufweisen.

Lagert man das getrocknete Gelbvorprodukt vor der Glühung zum Eisenoxidrot in einem Zwischenlager, so erweist sich das hohe Schüttgewicht des Vorproduktes als vorteilhaft. Da das Vorprodukt ein Schüttgewicht von 0,7 g/ml statt 0,33 g/ml wie bei herkömmlichem Eisenoxidgelb aufweist (Bayferrox® 920), benötigt man z.B. bei einem Vorratsbedarf von 100 t Vorprodukt nur ca. 150 m³ Silovolumen statt über 300 m³ Siloraum.

Bei Glühen des Vorproduktes wirken sich in bekannter Weise die Teilchengröße des Vorproduktes, Temperatur und Verweilzeit auf die Koloristik des resultierenden Eisenoxidrotpigmentes aus.

Das Ofenprodukt, der Rotklinker, wird in technisch üblicher Weise gemahlen, wobei der Fachmann aus einer Vielzahl von Mahlaggregaten auswählen kann. Beispielhaft, jedoch ohne Einschränkung seien Raymondmühle, Perlmühle, Luftstrahl- oder Dampfstrahlmühle genannt.

Überraschenderweise erhält man nach der Kalzination und Mahlung Eisenoxidrotpigmente mit einer neuartiger Teilchenform. Die neuartigen Eisenoxidpigmente enthalten clusterförmige Pigmentteilchen, was sie von herkömmlichen Eisenoxidrotpigmenten eindeutig unterscheidet. Die neuartigen Eisenoxidrotpigmente sind aufgrund ihrer Teilchenform besonders farbrein und außerdem spurenarm.

Ein Cluster besteht in der Regel aus 5 bis 15 Kugeln oder kugelähnlichen Teilchen, die miteinander verwachsen sind.

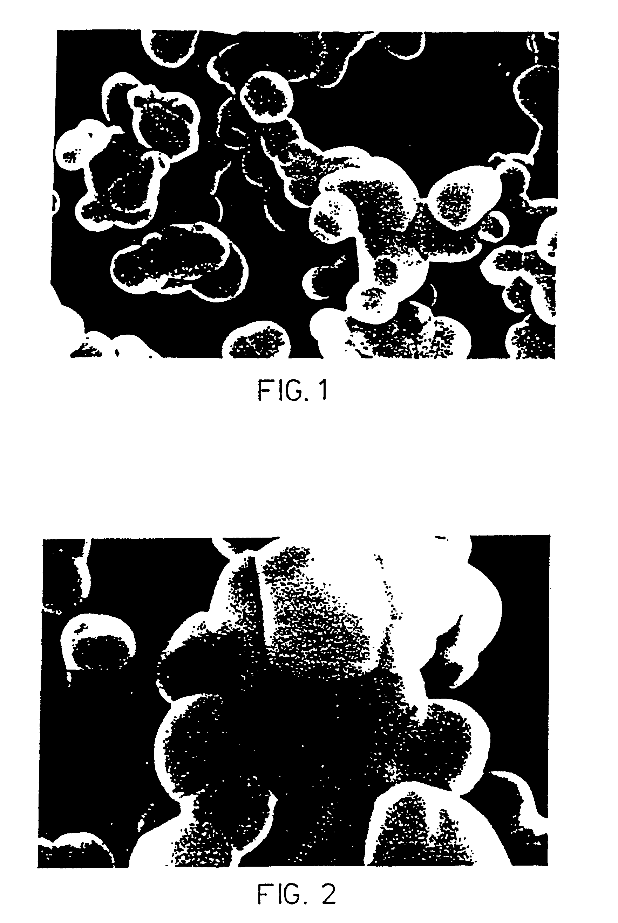

Die Fig. 1 und Fig. 2 sind elektronenmikroskopische Aufnahmen erfindungsgemäßer Eisenoxidrotpigmente in 60000 facher bzw. 120000 facher Vergrößerung.

Aufgrund ihrer Farbreinheit und ihrer Spurenarmut eignen sich die neuartigen Eisenoxidrotpigmente sehr gut als umweltverträgliche Eisenoxidrotpigmente zur Einfärbung von Lacksystemen, Dispersionen, Kunststoffen und Baustoffen aber auch zur Einfärbung von Lebensmitteln.

Gegenstand der Erfindung ist somit auch die Verwendung der umweltfreundlichen, erfindungsgemäßen Eisenoxidrotpigmente im Lack-, Kunststoff- und Baustoffbereich als auch in Lebensmitteln. Nachfolgend wird die Erfindung beispielhaft beschrieben, wobei hierin keine Einschränkung auf die Beispiele zu sehen ist.

## Beispiel 1

In einem Edelstahlbehälter wurden 342 g $Al_2(SO_4)_2 \times 18\ H_2O$ in 15,19 l $FeSO_4$-Lösung (c = 200 g $FeSO_4$/l) gelöst. Diese Lösung wurde in ca. 20 Minuten auf 55° geheizt, mit 2200 ml NaOH-Lösung (c = 9,0 Mol/l) versetzt und solange unter Rühren mit 400 Luft/h oxidiert, bis der pH-Wert ≤3,8 beträgt.

Zu 3,0 l der so erhaltenen Gelbkeimsuspension wurden 7,0 l Wasser gegeben und auf 80°C aufgeheizt. Anschliessend wurden bei 80°C unter Rühren und Begasung mit 1000 l Luft/h 5770 ml NaOH-Lösung (c = 4,7 Mol/l) und 9100 ml $FeSO_4$-Lösung (c = 200 g $FeSO_4$/l) in 15 Stunden so zudosiert, daß der pH-Wert in der Suspension konstant 3,9 ± 0,2 betrug.

Das entstandene Vorprodukt wurde salzfrei gewaschen. Die Gelbpaste wurde anschließend im Trockenschrank auf eine Restfeuchte <2% getrocknet. Danach wurden Proben des Trockengutes im Laborofen geglüht, wobei das Vorprodukt dehydratisiert. Angaben über die jeweilige Glühtemperatur der Proben enthalten die nachfolgenden Tabellen.

Der durch Glühung erhaltene Ofenklinker wurde im Mikrodismembrator 60 sec. mit einer Stahlkugel gemahlen.

## Beispiel 2

In einem Edelstahlbehälter wurden zu 15,19 l $FeSO_4$-Lösung (c = 200 g $FeSO_4$/l) bei 50°C 206 ml Natriumaluminat-Lösung (c = 3,0 Mol $Al_2O_3$/l + 9,05 Mol NaOH/l) und 1793 ml NaOH-Lösung (c = 9,0 Mol/l) zugesetzt und bei 50-55°C solange unter Rühren mit 500 l Luft/h oxidiert, bis der pH-Wert ≤3,8 betrug, 3,0 l dieser Gelbkeimsuspension wurden mit Wasser auf 10 l verdünnt und auf 80°C geheizt. Nach der Aufheizung fiel der pH-Wert auf ≤3,0. Anschließend wurden bei 80°C unter Rühren und Begasung mit 1000 l Luft/h in 12 Stunden 4,08 l NaOH-Lösung (c = 5,0 Mol/l) und ca. 6,40 l $FeSO_4$-Lösung (c = 200 g $FeSO_4$/l) so zudosiert, daß der pH-Wert in der Suspension pro Stunde um 0,1 - 0,2 Einheiten bis pH = 4,0 steigt dann konstant 4,0 ± 0,1 betrug.

Das entstandene Vorprodukt wurde salzfrei gewaschen und die Gelbpaste anschließend im Trockenschrank auf eine Restfeuchte <2% getrocknet. Danach wurden Proben des Trockengutes im Laborofen geglüht, wobei das Vorprodukt dehydratisierte. Angaben über die jeweilige Glühtemperatur der Proben enthalten die nachfolgenden Tabellen.

Der durch Glühung erhaltenene Ofenklinker wird im Mikrodismembrator 60 sec mit einer Stahlkugel gemahlen.

## Beispiel 3

In einem Edelstahlbehälter wurden zu 15,19 l $FeSO_4$-Lösung (c = 200 g $FeSO_4$/l) 1030 ml $AlCl_3$-Lösung (c = 1,20 Mol $AlCl_3$/l) gegeben. Nach dem Aufheizen auf 50°C wurde diese Lösung mit 2546 ml NaOH-Lösung (c= 9,0 Mol/l) versetzt und unter Rühren bei 50-55°C solange mit 500 l Luft/h oxidiert, bis der pH-Wert ≤3,8 betrug. Zu 4,5 l dieser Gelbkeimsuspension wurden 10,5 l Wasser hinzugefügt und dann auf 80°C geheizt. Bei 80°C unter Rühren und Begasung mit 800 l Luft/h wurden 2765 ml NaOH-Lösung (c = 5,0 Mol/l) und 3060 ml $FeSO_4$-Lösung (c = 225 g $FeSO_4$/l) so zudosiert, daß in der Suspension der pH-Wert = 4,0 ± 0,2 nach 16 Stunden erreicht hatte. Das entstandene Vorprodukt wurde salzfrei gewaschen und die Gelbpaste anschließend im Trockenschrank auf eine Restfeuchte <2% getrocknet. Danach wurden Proben des Trockengutes im Laborofen geglüht, wobei das Vorprodukt dehydratisierte. Angaben über die jeweilige Glühtemperatur der Proben enthalten die nachfolgenden Tabellen.

Der durch Glühung erhaltene Ofenklinker wird im Mikrodismembrator 60 sec mit einer Stahlkugel gemahlen.

## Beispiel 4

62,0 m³ techn. $FeSO_4$-Lösung[1]) (c= 201,0 g $FeSO_4$/l) und 2215 l techn. $Al_2(SO_4)_3$-Lösung (c = 1,00 Mol/l) wurden unter Rühren auf 30°C geheizt. Nach dem Aufheizen wurden 9,40 m³ techn. Natronlauge (c = 9,50 Mol/l) zugepumpt und bei gleichzeitiger Steigerung der Temperatur bis auf 45°C solange unter Rühren mit 700 m³ Luft/h oxidiert, bis der pH-Wert ≤ 3,8 betrug.

Zu 36,0 m³ dieser Gelbkeimsuspension wurden 80,0 m³ Wasser hinzugefügt und dann auf 75°C geheizt. Nach der Aufheizung fiel der pH-Wert auf ≤3,0. Anschließend wurden bei 75°C unter Rühren und Begasung mit 700 m³ Luft/h in ca. 16 Stunden 26,0 m³ Natronlauge techn. (c = 5,00 Mol/l) und 37,0 m³ techn. $FeSO_4$-Lösung[1]) (c = 201,0 g FeSO/l) so zudosiert, daß der pH-Wert in der Suspension um 0,1-0,2 Einheiten pro Stunde bis pH = 3,8 steigt, dann konstant 4,0 ± 0,2 betrug.

Die Pigmentsuspension wurde salzfrei gewaschen, über ein Vakuumdrehfilter filtriert und die Filterpaste zur Glühung einem Drehrohrofen zugeführt. Der anfallende Ofenklinker wurde in einer Dampfstrahlmühle gemahlen.

Tabelle 1 enthält den Spurengehalt eines erfindungsgemäß hergestellten Eisenoxidrotpigmentes im Vergleich mit herkömmlichen Pigmenten. Tabelle 1 zeigt, daß die erfindungsgemäß hergestellten Pigmente insbesondere mit ihren sehr niedrigen As-, Pb-, Ba-Gehalten herkömmliche Eisenoxidrotpigmente an Reinheit übertreffen und sehr spurenarm sind.

Tabelle 2 vergleicht die Farbwerte von erfindungsgemäß hergestellten Eisenoxidrotpigmenten (Beispiele 2,3) mit Farbwerten herkömmlicher Eisenoxidrotpigmente. Das erfindungsgemäß hergestellte Eisenoxidrotpigment zeichnet sich durch seine besonders hohe Farbreinheit, ausgedrückt durch den Rotanteil a* und die hohe Farbsättigung c* gegenüber Konkurrenzprodukten aus. Die Farbwerte der Pigmente wurden im Lack Alkydal® F 48 (Handelprodukt der Bayer AG) bei 10% Pigmentvolumenkonzentration gemäß DIN 6174 (äquivalent ISO/DIN 7742, 1-3 drafts) CIELAB c/2 grd ermittelt.

1) Hergestellt aus Eisensulfatheptahydrat, Nebenprodukt bei der Herstellung von Titandioxid nach dem sogenannten Sulfatverfahren.

Tabelle 1: Spurengehalt von Rotpigmenten

| Produkt | As | Pb | BaSO$_4$ | Sb | Ba | Hg | Se |
|---|---|---|---|---|---|---|---|
| Coppera Red a) | <5 [1] | 1 - 15 [1] | ./. | 5-15 [1] | 10-100 [1] | <0,1 [1] | <20 [1] |
| Precipitated Red a) | 30-60 [1] | 10-40 [1] | ./. | 5-20 [1] | 30-120 [1] | <0,1 [1] | <20 [1] |
| Beispiel 1 b) | <5 | <5 | <5 | <5 | <1 | <1 | <5 |

Alle Zahlenangaben in ppm
a) Handelsprodukte der Pfizer Inc.
b) Gesamtgehalt an Cu, BaSO$_4$, Zn, Sb, Cr: 130 ppm
1) Industrial Minerals and Rocks, Hancock, 1975, New York, Page 335, Table 8.

EP 0 290 908 B1

EP 0 290 908 B1

## Tabelle 2

### Farbabstände von Eisenoxid-Pigmenten nach DIN 6174, CIELAB C/2grd.

### Purton in Alkyldallack F 48, PVK = 10%

| Bei-spiel | Glüh-temperatur | Bezug | Farbabstände | | | | |
|---|---|---|---|---|---|---|---|
| | | | $\Delta$Hgrd | $\Delta$C* | $\Delta$L* | $\Delta$a* | $\Delta$b* |
| 1 | 775° C | Pfizer RO 3097 | 0,1 | 0,6 | 0,7 | 0,4 | 0,4 |
| 2 | 775° C | Pfizer R 1299 | 0,1 | 0,6 | -0,2 | 0,5 | 0,2 |
| 2 | 800° C | Pfizer R 2199 | 0,3 | 1,1 | 0,2 | 0,7 | 0,8 |
| 2 | 825° C | Pfizer RO 3097 | 1,3 | 1,9 | 1,4 | 1,1 | 1,7 |
| 3 | 800° C | Pfizer R 1299 | 1,3 | 0,9 | 0,8 | 0,2 | 1,1 |
| 3 | 825° C | Pfizer R 1299 | 0 | 0,8 | 0,1 | 0,7 | 0,3 |
| 4 | 800° C | Pfizer R 1299 | 0,2 | 0,5 | 0 | 0,4 | 0,2 |

## Ansprüche

1. Eisenoxidrotpigmente, dadurch gekennzeichnet, daß sie aus clusterförmigen Pigmentteilchen bestehen.

2. Eisenoxidrotpigmente gemäß Anspruch 1, dadurch gekennzeichnet, daß die clusterförmigen Pigmentteilchen aus mindestens fünf miteinander verwachsenen kugelförmigen Teilchen bestehen.

3. Farbreine Eisenoxidrotpigmente gemäß einem der Ansprüche 1 oder 2, dadurch gekennzeichnet, daß deren Fremdmetallgehalt an As, Pb, Ba jeweils <5 ppm beträgt.

4. Farbreine Eisenoxidrotpigmente gemäß einem oder mehrerer der Ansprüche 1 bis 3, dadurch gekennzeichnet, daß deren Gehalt an Cu, $BaSO_4$, Zn, Sb, Cr insgesamt <200 ppm beträgt.

5. Verfahren zur Herstellung von Eisenoxidrotpigmenten gemäß einem oder mehrerer der Ansprüche 1 bis 4, dadurch gekennzeichnet, daß die Keimbildung von Eisenoxidgelb ($\alpha$-FeOOH) in Gegenwart von Verbindungen der Elemente B, Al, Ga, Si, Ge und/oder Sn in Mengen von 0,05 bis 10 Gew.-%, berechnet als 3- oder vierwertige Oxide und bezogen auf den rechnerisch ausgefällten $\alpha$-FeOOH-Keim, vorgenommen wird, der Pigmentbildungsschritt in üblicher Weise erfolgt, von dem dabei entstehenden Gelbschlamm die Salzlauge abgetrennt und die isolierte Eisenoxidgelbpaste zum Eisenoxidrotpigment geglüht und gemahlen wird.

6. Verfahren gemäß Anspruch 5, dadurch gekennzeichnet, daß die Abtrennung der Salzlauge durch Sedimentation geschieht.

7. Verfahren gemäß einem der Ansprüche 5 und 6, dadurch gekennzeichnet, daß Eisenoxidgelbpasten getrocknet- bzw. geglüht werden, die bei der Beschickung der Trocken- oder Glühaggregate einen Feststoffgehalt von mindestens 50 Gew.-% aufweisen.

8. Verwendung der Eisenoxidrotpigmente gemäß einem oder mehrerer der Ansprüche 1 bis 7 zur Einfärbung von Lebensmitteln.

9. Verwendung der Eisenoxidrotpigmente gemäß einem oder mehrerer der Ansprüche 1 bis 7 zur Ein-

6

färbung von Lacksystemen, Dispersionen, Kunststoffen und Baustoffen.

## Revendications

1. Pigments au rouge d'oxyde de fer, caractérisés en ce qu'ils sont constitués de particules pigmentaires sous forme d'agrégats.

2. Pigments au rouge d'oxyde de fer suivant la revendication 1, caractérisés en ce que les particules de pigments sous forme d'agrégats sont constitués d'au moins 5 particules sphériques soudées les unes aux autres.

3. Pigments au rouge d'oxyde de fer de couleur pure suivant la revendication 1 ou 2, caractérisés en ce que leur teneur en chacune des impuretés métalliques As, Pb, Ba est inférieure à 5 ppm.

4. Pigments au rouge d'oxyde de fer de couleur pure suivant une ou plusieurs des revendications 1 à 3, caractérisés en ce que leur teneur en Cu, $BaSO_4$, Zn, Sb, Cr est au total inférieure à 200 ppm.

5. Procédé de production de pigments au rouge d'oxyde de fer suivant une ou plusieurs des revendications 1 à 4, caractérisé en ce que la formation de germes de jaune d'oxyde de fer ($\alpha$-FeOOH) est effectuée en présence de composés des éléments B, Al, Ga, Si, Ge et/ou Sn en quantités de 0,05 à 10% en poids, exprimées en oxydes trivalents ou tétravalents et par rapport à la quantité calculée de précipités de germe d'$\alpha$-FeOOH, l'étape de formation des pigments est conduite d'une manière classique, la liqueur saline est séparée de la liqueur jaune qui est alors produite et la pâte isolée de jaune d'oxyde de fer est calcinée en formant le pigment au rouge d'oxyde de fer qui est broyé.

6. Procédé suivant la revendication 5, caractérisé en ce que la séparation de la liqueur saline est effectuée par sédimentation.

7. Procédé suivant l'une des revendications 5 et 6, caractérisé en ce qu'on sèche ou calcine des pâtes au jaune d'oxyde de fer qui présentent, lorsqu'elles sont chargées dans les appareils de séchage ou de calcination, une teneur en matière solide d'au moins 50% en poids.

8. Utilisation des pigments au rouge d'oxyde de fer selon une ou plusieurs des revendications 1 à 7 pour la coloration d'aliments.

9. Utilisation des pigments au rouge d'oxyde de fer suivant une ou plusieurs des revendications 1 à 7 pour la coloration de compositions de peinture, de dispersions, de matières plastiques et de matériaux de construction.

## Claims

1. Iron oxide red pigments, characterized in that they consist of cluster-like pigment particles.

2. Iron oxide red pigments as claimed in claim 1, characterized in that the cluster-like pigment particles consist of at least five intergrown spherical particles.

3. Pure-coloured iron oxide red pigments as claimed in claim 1 or 2, characterized in that their content of foreign metals in the form of As, Pb, Ba is < 5 ppm of each.

4. Pure-coloured iron oxide red pigments as claimed in one or more of claims 1 to 3, characterized in that they contain a total of <200 ppm Cu, $BaSO_4$, Zn, Sb, Cr.

5. A process for the production of the iron oxide red pigments claimed in one or more of claims 1 to 4, characterized in that the seed formation of iron oxide yellow ($\alpha$FeOOH) is carried out in the presence of compounds of the elements B, Al, Ga, Si, Ge and/or Sn in quantities of 0.05 to 10% by weight, expressed as 3- or 4-valent oxides and based on the theoretically precipitated $\alpha$-FeOOH seed, the pigment-forming step is carried out in the usual way, the brine is separated from the yellow sludge formed and the iron oxide yellow paste isolated is calcined to the iron oxide red pigment and ground.

6. A process as claimed in claim 5, characterized in that the brine is separated by sedimentation.

7. A process as claimed in claim 5 or 6, characterized in that the iron oxide yellow pastes dried or calcined have a solids content of at least 50% by weight on introduction into the drying or calcining units.

8. The use of the iron oxide pigments according to one or more of claims 1 to 7 for colouring foods.

9. The use of the iron oxide red pigments according to one or more of claims 1 to 7 for pigmenting paint systems, dispersions, plastics and building materials.

7

FIG. 1

FIG. 2